Europäisches Patentamt

European Patent Office

Office européen des brevets

(11) Veröffentlichungsnummer: **0 167 647 B1**

## EUROPÄISCHE PATENTSCHRIFT

(45) Veröffentlichungstag der Patentschrift: **18.03.92**

(21) Anmeldenummer: **84108087.2**

(22) Anmeldetag: **10.07.84**

(51) Int. Cl.⁵: **B01D 19/00**, D01D 1/10

(54) Verfahren und Vorrichtung zum Entgasen von Flüssigkeiten und deren Verwendung.

(30) Priorität: **18.04.84 DE 3414770**

(43) Veröffentlichungstag der Anmeldung:
**15.01.86 Patentblatt 86/03**

(45) Bekanntmachung des Hinweises auf die
Patenterteilung:
**18.03.92 Patentblatt 92/12**

(84) Benannte Vertragsstaaten:
**AT CH FR LI**

(56) Entgegenhaltungen:
**CH-A- 518 113
DE-A- 35 224
DE-C- 964 116
US-A- 2 773 559
US-A- 2 929 443**

**DEA P 35 224 D, W. VOGELBUSCH**

(73) Patentinhaber: **Ebner & Co. KG Anlagen und
Apparate
Industriestrasse 8
W-6419 Eiterfeld(DE)**

(72) Erfinder: **Ebner, Karl
Theodor-Heuss-Strasse 3
W-6370 Oberursel/Ts(DE)**
Erfinder: **Ebner, Stefan, Dipl.-Ing.
Theodor-Heuss-Strasse 3
W-6370 Oberursel/Ts(DE)**

(74) Vertreter: **Jaeger, Klaus, Dipl.-Chem. Dr. et al
Jaeger, Steffens & Köster Patentanwälte
Pippinplatz 4a
W-8035 München-Gauting(DE)**

## Beschreibung

Die Erfindung betrifft ein Verfahren zum Entgasen von Flüssigkeiten der im Oberbegriff des Anspruchs 1 genannten Art.

Die Erfindung betrifft weiterhin einen mehrstufigen Entspanner zur Durchführung des Verfahrens sowie die Verwendung des Entspanners.

In Flüssigkeiten gelöst oder ungelöst enthaltene Gase werden überwiegend unter vermindertem Druck aus den Flüssigkeiten ausgetrieben. In der Regel werden die Flüssigkeiten zu diesem Zweck in eine Kammer hinein zerstäubt, in der ein Unterdruck herrscht. Durch die Druckverminderung wird ein großer Anteil der in der Flüssigkeit enthaltenen Gase freigesetzt. Mit zunehmenden Unterdruck wird zunehmend mehr Gas freigesetzt.

Dieser Vorgang erreicht seinen Grenzwert, wenn in der Kammer ein Unterdruck herrscht, bei dem die Flüssigkeit bei ihrer aktuellen Temperatur siedet. Im Hinblick auf eine effektive Entgasung der Flüssigkeit gilt als optimal, wenn die zu entgasende Flüssigkeit auf eine Temperatur von 1° bis 2° C unter ihren Siedepunkt bei dem jeweiligen Entspannungsunterdruck abgekühlt wird. Gleichzeitig verdampfen dabei größere Flüssigkeitsmengen. Der dabei gebildete Dampf dient gleichzeitig als Träger für das freigesetzte Gas. Gleichzeitig tritt dadurch in erwünschter Weise eine Verringerung des Partialdruckes des oder der aus der Flüssigkeit freigesetzten Gase auf ein unter den jeweils herrschenden Zustandsbedingungen mögliches Minimum ein.

Nachteilig an diesem Verfahren ist, daß die Gesamtmenge des aus der Flüssigkeit freigesetzten Gases in dem abziehenden Dampf enthalten und mit diesem mitgeführt wird. Dies erschwert sowohl die Wiedergewinnung des oder der aus der Flüssigkeit freigesetzten Gase als auch eine Rückführung oder Weiterverwendung der Dampfphase.

Um hier Abhilfe zu schaffen, wird das Entgasen von Flüssigkeiten auch zweistufig durchgeführt, Bei diesem zweistufigen Verfahren wird die gasbeladene Flüssigkeit in einer ersten Entspannungsstufe soweit entspannt, daß ein signifikanter Teil der in der Flüssigkeit enthaltenen Gase freigesetzt wird, ohne daß jedoch bereits eine signifikante Verdampfung der Flüssigkeit eintritt. Dies bedeutet dann, daß der in der nachfolgenden zweiten Entspannungsstufe unter Abkühlung gebildete Dampf einen Gasanteil mitführt, der wesentlich geringer ist als beim einstufigen Verfahren, so daß die Kondensation des in der zweiten Entspannungsstufe gebildeten Dampfes unter wesentlich günstigeren Bedingungen und insbesondere auch mit wesentlich kleineren Anlagen erfolgen kann.

In der CH-A-518 113 ist ein Verfahren zur mindestens zweistufigen Vakuumentgasung von Flüssigkeiten sowie eine Vorrichtung zur Ausführung dieses Verfahrens beschrieben. Bei diesem bekannten Verfahren wird die zu entgasende Flüssigkeit in einer ersten Entgasungsstufe vorentgast. Die vorentgaste Flüssigkeit wird anschließend stark aufgeheizt und in eine zweite Entgasungsstufe übergeleitet. Die in der zweiten Entgasungsstufe aus der Flüssigkeit austretenden gas- und dampfförmigen Anteile werden in die erste Entgasungsstufe zurückgeführt und zum Aufheizen der aus der ersten Entgasungsstufe austretenden Flüssigkeit verwendet.

Angesichts dieses Standes der Technik liegt der Erfindung die Aufgabe zugrunde, ein Verfahren und eine Vorrichtung zur Durchführung dieses Verfahrens zu schaffen, das die Einsparung von Prozeßenergie ermöglicht.

Zur Lösung dieser Aufgabe schafft die Erfindung ein Verfahren der eingangs genannten Art, das die Merkmale des kennzeichnenden Teils des Anspruchs 1 aufweist. Die Anlage, speziell der Mehrstufenentspanner zur Durchführung dieses Verfahrens, weist die im kennzeichnenden Teil des Anspruchs 5 genannten Merkmale auf.

Ausgestaltungen der Erfindung sind Gegenstand der Unteransprüche.

Das Verfahren und die Vorrichtung gemäß der Erfindung werden vorzugsweise zum Entgasen der in der Zellwoll-Industrie anfallenden Spinnbäder verwendet.

Der wesentliche Grundgedanke der Erfindung liegt also darin, die mehrstufige Entgasung von Flüssigkeiten, insbesondere verdünnten wässrigen Lösungen, in der Weise zumindest dreistufig durchzuführen, wobei die Energie, die bei der Entspannung in die Unterdruckkammer hinein entzogen wurde, durch eine zwischen zwei aufeinanderfolgende Entspannungsstufen eingeschobene Heizstufe, also eine Zwischenaufheizung der Flüssigkeit, aufgebracht wird, wobei eine solche Aufheizung um 1° bis 2° C mit preiswerter und anderweitig kaum noch zu verwertender Prozeßwärme erfolgen kann, beispielsweise mit Abdampf aus einer Eindampfanlage oder irgendwelchem anderen niedrigstenergetischen Abdampf für den sonst Kühlwasser eingesetzt werden muß, um ihn endgültig niederzuschlagen.

Nach einer Ausgestaltung einer Erfindung wird dieses dreistufige Entgasungsverfahren vorzugsweise so geführt, daß in der ersten Stufe bei einem Unterdruck entgast wird, bei dem noch keine signifikante Verdampfung der Flüssigkeit, also insbesondere keine Siedeverdampfung der Flüssigkeit eintritt, so daß die in dieser ersten Stufe freigesetzten Gase so trocken sind, daß sie direkt oder gegebenenfalls nach Kühlung mit einer gebräuchlichen Luftpumpe oder Vakuumpumpe abgezogen werden können. Dabei wird insbesondere bei dieser Verfahrensführung in der ersten Entspannungsstufe die zu entgasende bzw. vorentgaste Flüssigkeit in der zweiten Entspannungsstufe nach der Aufheizung unter starker Verdampfung, vorzugsweise Siedeverdampfung, so weit entspannt, daß sie zumindest im wesentlichen die Temperatur erreicht, die sie ursprünglich vor der Entspannung in der ersten Entspannungsstufe aufweist. Bei dieser Verfahrensführung liefert das Verfahren also als Verfahrensprodukt eine Flüssigkeit, die praktisch die gleiche Temperatur wie die aufgegebene Flüssigkeit aufweist, jedoch mit minimalem Abfallenergiebedarf praktisch vollkommen entgast ist, wobei "praktisch vollkommen" bedeutet, daß der Restgasgehalt in der entgasten Flüssigkeit nicht größer als 5% des urspünglichen Gasgehaltes ist.

Nach einer weiteren Ausgestaltung des Verfahrens gemäß der Erfindung wird das in der letzten Entspannungsstufe entstehende Dampf-Gas-Gemisch einem Kondensator, vorzugsweise Oberflächenkondensator, zugeführt, in dem der erforderliche Unterdruck durch einen Entlüftungsdampfstrahlapparat aufrecht erhalten wird, und in einem nachgeschalteten zweiten Kondensator, vorzugsweise ebenfalls ein Oberflächenkondensator, der Treibdampf des Dampfstrahlapparates weitgehend, das heißt praktisch vollkommen, kondensiert wird. Die bei dieser Kondensation freigesetzten Gase können ohne Bedenken direkt über eine Luftpumpe oder Vakuumpumpe abgezogen werden.

Die Erfindung ist im folgenden anhand eines Ausführungsbeispiels in Verbindung mit der Zeichnung näher erläutert. Dabei zeigt die einzige Figur, nämlich die

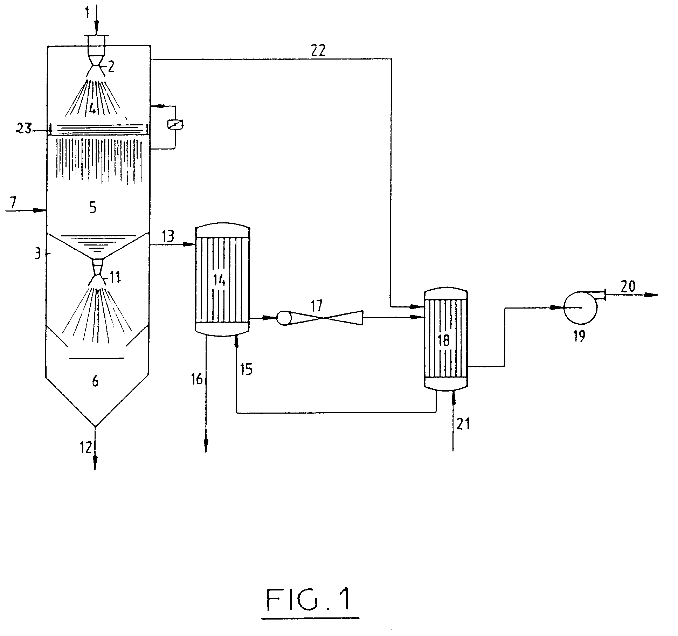

Fig. 1 in schematischer Darstellung eine Anlage zur Durchführung des Verfahrens gemäß der Erfindung.

Die in der Fig. dargestellte beispielhafte Anlage zum Entgasen von Zellwoll-Spinnbädern besteht aus einem mehrstufigen Entspanner 3, zwei Oberflächenkondensatoren 14,18, einem Dampfstrahlapparat 17 und einer Vakuumpumpe 19.

Der dreistufige Entspanner 3 besteht aus einer ersten Entspannungskammer oder Entspannungsstufe 4, einer nachgeschalteten Aufheizkammer oder Aufheizstufe 5 und einer dieser nachgeschalteten zweiten Entspannungsstufe 6.

Über einen Zulaufstutzen 1 und eine Zerstäuberdüse 2 wird das mit Gasen beladene Spinnbad mit einer Temperatur von 33° C eingesprüht. Der Druck in der ersten Entspannungsstufe ist auf 80 mbar eingestellt. Bei dieser Temperatur und diesem Unterdruck tritt noch keine nennenswerte Verdampfung des wässrigen Spinnbades ein. Unter Berücksichtigung einer Siedepunktserhöhung von 3° C in dem hier aus der Praxis gewählten Beispiel würde das Spinnbad erst bei einem Druck von 42,4 mbar sieden, während in der Kammer der ersten Entspannungsstufe ein Druck von 80 mbar eingeregelt wird.

Andererseits reicht der Unterdruck von 80 mbar jedoch aus, um bereits den größten Teil der in der Spinnbadflüssigkeit mitgeführten Luft, des Schwefelwasserstoffs und des Schwefelkohlenstoffs auszutreiben. Bei diesem Druck von 80 mbar werden größenordnungsmäßig 70% bis 80% der vom Spinnbad mitgeführten Gase freigesetzt.

Das in die Kammer der ersten Entspannungsstufe 4 eingesprühte Spinnbad wird auf einem Auffangboden 23 gesammelt, der die Kammer der ersten Entspannungsstufe 4 gegenüber der nachfolgenden Kammer 5, nämlich der Heizstufe des Entspanners abschließt. Der Boden 23 ist als Lochblech ausgebildet, durch den hindurch die Spinnbadflüssigkeit fein verteilt in die Kammer der anschließenden Heizstufe 5 rieselt. Dabei wird die Kammer der Heizstufe 5 über eine Zuleitung 7 mit preiswertem Heizmittel beaufschlagt, in dem hier beschriebenen Ausführungsbeispiel mit dem Abdampf aus einer Eindampfanlage, der nicht wesentlich wärmer als 34° C, meist 35° bis 36° C, ist.

In der Kammer der Heizstufe 5 wird ein Unterdruck von 45 mbar aufrechterhalten, der bei einer Siedepunktserhöhung der Spinnbadflüssigkeit von 3° C einer Spinnbadtemperatur von 34° C entspricht.

Die in der Heizstufe 5 um mindestens 1° C aufgewärmte Spinnbadflüssigkeit wird anschließend vom Boden der Heizstufe 5 über eine Düse 11 in die Kammer der zweiten Entspannungsstufe 6 hinein auf einen Unterdruck von 42,5 mbar entspannt. Dabei stellt sich wiederum die ursprüngliche Spinnbadtemperatur von 33° C ein, also die Temperatur, mit der die Spinnbadflüssigkeit am Zulaufstutzen 1 in den Entspanner aufgegeben wird. Unter diesen Bedingungen tritt jedoch in der Kammer der zweiten Entspannungsstufe 6 eine starke Verdampfung der Spinnbadflüssigkeit, hier des Wassers, ein. Dabei werden die restlichen Anteile der noch im Spinnbad enthaltenen Gase, insbesondere Schwefelwasserstoff und Schwefelkohlenstoff in Restmengen, freigesetzt und mit dem Dampf abgeführt. Das am Ablaufstutzen 12 des Entspanners und Entgasers 3 aus der zweiten Entspannungsstufe 6 abgezogene Spinnbad enthält nicht mehr als 5% der urspünglich am Einlaufstutzen 1 mitgeführten Gase.

Über eine aus dem Dampfraum der Kammer der zweiten Entspannungsstufe 6 abzweigende Abzugsleitung 13 gelangt der in der zweiten Entspannungsstufe 6 freiwerdende Dampf mit den restlichen Anteilen an Schwefelwasserstoff und Schwefelkohlenstoff in einen nachgeschalteten Oberflächenkondensator 14. Der Oberflächenkondensator wird mit Kühlwasser betrieben, das über einen Anschlußstutzen 15 aufgegeben wird und über einen Ablaufstutzen 16 abläuft.

Für die Entlüftung und Aufrechterhaltung des Unterdrucks von 42,5 mbar in der Kammer der zweiten Entspannungsstufe 6 sorgt ein Entlüftungsdampfstrahlapparat 17, der dem Oberflächenkondensator 14 nachgeschaltet ist. In diesem Dampfstrahlapparat 17 wird das aus der zweiten Entspannerstufe 6 abgesaugte Dampf-Gas-Gemisch von 42,5 mbar auf beispielsweise 80 mbar komprimiert. Das so komprimierte Dampf-Gas-Gemisch kann dann unter Zwischenschaltung eines zweiten Oberflächenkondensators 18 mit diesen 80 mbar einer Vakuumluftpumpe 19 zugeführt werden, aus der das Gemisch mit Atmosphärendruck austritt. Das Gasgemisch wird dann über eine Rohrleitung 20 einer Rückgewinnungsanlage für den Schwefelwasserstoff und den Schwefelkohlenstoff zugeführt.

Um möglichst hohe Anteile des von den abziehenden Gasen noch mitgeführten Dampfes zu kondensieren, wird das vom Oberflächenkondensator 14 benötigte Kühlwasser in der in Fig. 1 ersichtlichen Weise vorzugsweise zunächst über eine Rohrleitung 21 dem Oberflächenkondensator 18 zugeführt und läuft aus diesem über die Leitung 15 erst dann zum vorgeschalteten Oberflächenkondensator 14. Hierdurch wird eine optimale Ausnutzung des benötigten Kühlwassers erzielt.

Über eine Abgasleitung 22 werden dem nachgeschalteten Oberflächenkondensator 18 auch die aus der ersten Entspannerstufe 4 abgezogenen Gase zugeleitet, von wo sie nach Kühlung von der Luftpumpe 19 abgesaugt und mit Atmosphärendruck in die Verwertungsleitung 20 gefördert werden.

## Patentansprüche

1. Verfahren zum Entgasen von gasbeladenen Flüssigkeiten, bei dem die Flüssigkeit in zwei Entspannungsstufen unter Entgasung und Abkühlung entspannt wird, wobei in der ersten Entspannungsstufe bei einem Unterdruck, bei dem noch keine Siedeverdampfung eintritt, entspannt wird,
dadurch **gekennzeichnet**,
daß man die Flüssigkeit zwischen den beiden Entspannungsstufen um 1°-2°C aufheizt und in der zweiten Entspannungsstufe bei weiter verringertem Druck unter Siedeverdampfung soweit entspannt, daß sie wieder ihre ursprüngliche Temperatur erreicht.

2. Verfahren nach Anspruch 1,
dadurch **gekennzeichnet**,
daß man die Flüssigkeit mit einem anderweitig nicht mehr verwertbaren Abdampf aufheizt.

3. Verfahren nach Anspruch 1 oder 2,
dadurch **gekennzeichnet**,

daß man das in der zweiten Entspannungsstufe freiwerdende Dampf-Gas-Gemisch einem Oberflächen- oder Mischkondensator zuführt, in dem der erforderliche Unterdruck durch einen Entlüftungsdampfstrahlapparat aufrecht erhalten wird, und den Treibdampf des Dampfstrahlapparates in einem nachgeschalteten zweiten Oberflächen- oder Mischkondensator weitgehend kondensiert, wonach man die noch vorhandenen Gase direkt einer Luftpumpe zuführt.

4. Verfahren nach mindestens einem der Ansprüche 1 bis 3,
dadurch **gekennzeichnet**,
daß man Zellwoll-Spinnbänder als gasbeladene Flüssigkeit einsetzt.

5. Mehrstufiger Entspanner zur Durchführung des Verfahrens nach einem der Ansprüche 1 bis 4,
dadurch **gekennzeichnet**,
daß der Entspanner (3) aus drei Kammern besteht, nämlich einer ersten Entspannungsstufe bzw. -kammer (4), einer Aufheizstufe bzw. -kammer (5) und einer zweiten Entspannungsstufe bzw. -kammer (6), die mit Einrichtungen (23, 11) für den Übertritt der Flüssigkeit von einer Kammer zur nächstfolgenden versehen sind.

6. Entspanner nach Anspruch 5,
**gekennzeichnet** durch
eine Unterdruckleitung (22), die den Gasraum der ersten Entspannungsstufe (4) direkt oder unter Zwischenschaltung eines Kühlers (18) mit einer Unterdruckpumpe (19) verbindet.

7. Verwendung des Entspanners nach Anspruch 5 oder 6 zum Entgasen von Zellwoll-Spinnbändern.

## Claims

1. Process for degassing gas containing liquids wherein the liquid is expanded in two expansion steps under degasing and cooling whereby the expansion in the first expansion step is performed at an underpressure at which a boiling evaporation does not yet take place,
**characterized** in that
the liquid is heated for 1 °C to 2 °C between the two expansion steps and is further expanded in the second expansion step at a further reduced pressure under boiling evaporation to that an extent that it reaches its original temperature again.

2. Process according to claim 1,

**characterized** in that
the liquid is heated with waste steam which cannot be used otherwise.

3. Process according to claim 1 or 2, **characterized** in that
the vapour-gas-mixture released in the second expansion step is fed to a surface condensor or a direct contact condensation condensor, respectively, in which the necessary underpressure is maintained by an evacuation steamer injector and the booster steam of the steam injector is almost completely condensed in a downstream second surface condensor or a direct contact condensation condensor whereafter the gases still present or directly are supplied to an air pump.

4. Process according to at least one of the claims 1 to 3, **characterized** in that
spun rayon spin baths are used as a liquid containing a gas.

5. Multi-step expander for performing the process according to one of the claims 1 to 4, **characterized** in that
the expander (3) consists of three chambers, i.e. a first expanding step or chamber (4), respectively, a heating step or chamber (5), respectively, and a second expanding step or chamber (6), respectively, which are equipped with means (23, 11) for feeding the liquid from one chamber to the following one.

6. Expander according to claim 5, **characterized**
by a vacuum pipe (22) which connects the gas space of the first expansion step (4) directly or by interconnecting a cooler (18) with a vacuum pump (19).

7. Use of the expander according to claim 5 or 6 for degassing spun rayon spin baths.

**Revendications**

1. Procédé de dégazage de liquides chargé en gaz, pour lequel le liquide est détendu en deux étages, en dégazant et en refroidissant, étant entendu que, dans le premier étage de détente, on effectue la détente en appliquant une dépression pour laquelle il ne se produit encore aucune vaporisation par ébullition, caractérisé en ce que:
   - le liquide est chauffé de 1° à 2° C entre les deux étages de détente, et
   - dans le deuxième étage de détente, on le détend sous une pression encore plus réduite, en évaporant par ébullition, suffisamment pour que le liquide ait de nouveau atteint sa température initiale.

2. Procédé suivant la revendication 1, caractérisé en ce qu'on chauffe le liquide avec un échappement de vapeur qui n'est plus utilisable par ailleurs.

3. Procédé suivant la revendication 1 ou la revendication 2, caractérisé en ce que, dans le deuxième étage de détente, on envoie le mélange gaz-vapeur libéré à un condensateur à mélange ou à effet de paroi, procédé dans lequel la dépression nécessaire est maintenue par un appareil de dégazage à éjecteur de vapeur et en ce qu'on condense largement la vapeur d'entraînement de l'appareil à éjecteur de vapeur dans un deuxième condenseur à mélange ou à effet de paroi, branché en aval, après quoi on envoie directement à une pompe à air les gaz qui se présentent encore.

4. Procédé suivant au moins l'une des revendications 1 à 3, caractérisé en ce que, comme liquide chargé en gaz, on introduit des bains de filage de laine de cellulose.

5. Détendeur à plusieurs étages pour l'exécution du procédé suivant l'une quelconque des revendications 1 à 4, caractérisé en ce que le détendeur (3) est constitué par trois chambres, c'est-à-dire d'un premier étage, ou chambre, de détente (4), d'un étage, ou chambre, de chauffage (5) et d'un deuxième étage, ou chambre, de détente (6), qui sont équipés avec des dispositifs (23, 11, 6) pour faire passer le liquide d'une chambre à la suivante.

6. Détendeur suivant la revendication 5, caractérisé par une conduite en dépression (22), reliant, soit directement, soit par l'intermédiaire d'un réfrigérant (18), le volume de gaz du premier étage de détente (4) avec une pompe à dépression (19).

7. Utilisation du détendeur suivant les revendications 5 ou 6, pour dégazer des bains de filage de laine de cellulose.

FIG.1